# EUROPEAN PATENT APPLICATION

(11) **EP 1 148 084 A2**
(43) Date of publication of application: **24.10.2001**
(21) Application number: 01201335.5
(22) Date of filing: 11.04.2001
(51) Int. Cl.: C08J 7/04, C09D 127/08

(54) **Film with a barrier coating and preparation method**

(30) Priority: 19.04.2000 IT MI000877
(71) Applicant: Gallazzi S.p.A., 20121 Milan (IT)
(72) Inventor: Ratti, Enzo, 21013 Gallarate (Varese) (IT)
(74) Representative: De Gregori, Antonella

(57) **Abstract**

A description follows of a film with a high thickness coating, consisting of a thermoplastic base, wherein the high thickness coating comprises a first layer made up of a primer in dispersion, suspension or aqueous emulsion and at least one subsequent homogeneous layer of a PVDC (polyvinylidene-chloride) copolymer, wherein said at least one homogeneous layer of PVDC (polyvinylidene-chloride) copolymer is present in a quantity of at least 20 g/m². The main advantage of this product is that it has extremely reduced diffusional properties with respect to water vapour, gases and aromas, and is therefore a product with optimum barrier properties, an excellent quality for the production of blister-type packaging, for example.

## Description

The present invention relates to a film with a barrier coating and the relative method for its preparation. In particular, said film with a barrier coating is used for the production of blister-type immediate containers, mainly for pharmaceutical and medical-surgical products.

The term "blister" refers to a product consisting of a flat structure in which blisters are formed, generally by means of a heating process, into which the single elements to be packaged are inserted. The blisters are then hermetically sealed using flat strips of appropriate thermoweldable materials (plastics, aluminum, paper), which represent the frangible element through which it is then possible to remove the product.

The present technique for the preparation of barrier bases for pharmaceutical blisters consists in the high thickness coating (40÷90 g/m² and over) of the base, by the laying of aqueous dispersions (emulsions) consisting of PVDC (polyvinylidene-chloride) copolymers.

The high thickness of the coating is required to guarantee high barrier values of the packaging, also under tropical conditions (38°C/90% RH), bearing in mind that in the production of blisters by thermoforming, the lining thickness becomes much thinner with respect to the initial thickness (in inverse proportion to the square of the surface increase).

In particular, according to the method currently applied, layers of a few grams per m² are generally deposited, and the high thickness of the coating required by pharmaceutical blisters is reached by repetition, by the overlaying of subsequent coatings.

In fact, present emulsions and laying technologies in use allow coatings with a maximum thickness of 10÷12 g/m², and it is not convenient to use coating machines with several contemporaneous passages, owing to the complexity of controlling the tensions in the drying tunnels of a product which is sensitive to temperature, such as PVC, and also for reasons relating to cost and plant dimensions. In this respect, a modern line with one coating head for the adhesive primer and two for the barrier resins is already about 80 meters long.

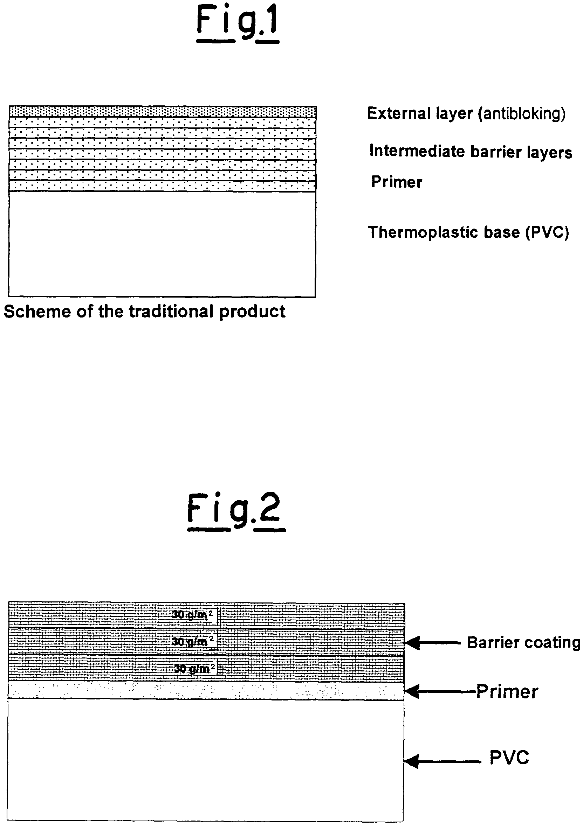

The present state of the art therefore operates with a process such as that described above and the product obtained has the structure indicated in Figure 1.

The objective of the present invention is to eliminate the drawbacks of the known art.

An object of the present invention relates to a film with a high thickness coating, consisting of a thermoplastic base, wherein the high thickness coating comprises a first layer made up of a primer in dispersion, suspension or aqueous emulsion and at least one subsequent homogeneous layer of a PVDC (polyvinylidene-chloride) copolymer, characterized in that said at least one homogeneous layer of PVDC (polyvinylidene-chloride) copolymer is present in a quantity of at least 20 g/m².

A further object of the present invention relates to the use of the product according to the present invention for the preparation of packaging.

An additional object of the present invention relates to a blister i.e. a barrier packaging, in particular for pharmaceutical and medical-surgical products, obtained by the thermoforming of the product according to the present invention, the subsequent filling of the blisters thus formed and welding.

An object of the present invention also relates to the method for the preparation of a film with a high thickness coating, which comprises the following steps:
a) preheating of a thermoplastic base;
b) corona treatment of said base;
c) depositing onto the base deriving from phase b) of a primer in dispersion, suspension or aqueous emulsion;
d) coating on said product of a homogeneous layer of PVDC (polyvinylidene-chloride) copolymer in a quantity of at least 20 g/m² of dry product;
e) thermal pretreatment at a temperature ranging from 60 to 100°C;
f) drying at a temperature within the range of 70-120°C, with an air rate of 50 to 100 m/min;
g) cooling of the coated film to a temperature of the film ranging from 30 to 50°C;
h) rewinding of the coated film obtained.

In particular, phases d)-h), from the coating to the rewinding, can be repeated until the final desired thickness is reached.

The main advantage of the product according to the present invention is that it has extremely reduced diffusional properties with respect to water vapour, gases and aromas, and is therefore a product with optimum barrier properties, an excellent quality for the production of blister-type packaging, for example.

A further advantage is that the process for obtaining the product of the present invention allows high thickness coatings to be effected for each passage of the machine, thus drastically reducing the lead time and consequently improving numerous cost factors (operating and financial).

A better understanding of the characteristics and advantages of the product according to the present invention can be obtained from the following detailed and illustrative description, referring to the enclosed figures wherein:
figure 1 represents a sectional view of the product according to the state of the art;
figure 2 represents a sectional view of the product according to the invention;
figure 3 represents a block diagram of the process according to the present invention.

The preferred thermoplastic base is a film made of calendered rigid PVC.

In particular, the primer is applied starting from an aqueous dispersion.

The primer in aqueous dispersion can be selected from polyurethanes, terpolymer acrylic emulsions with different functional groups, elastomers.

The selection of the primer in aqueous dispersion requires suitable treatment of the surface of the thermoplastic base to obtain the necessary adhesion between base and primer.

In particular, as specified in more detail in the description of the process, a corona treatment is carried out on the base.

The primer in aqueous dispersion which is preferably used in the commercial product EMULDUR (Basf) which is applied with a homogeneous thickness varying from 3 to 5 g/m².

The PVDC (polyvinylidene-chloride) copolymer can be associated with other polymers and auxiliary systems.

The PVDC copolymer can be associated with sliding and antiblocking systems.

In particular, the PVDC copolymer can be associated with a surface-active agent in the coating of the external layer.

The presence of the surface-active agent, in fact, can slow down the crystallization rate of this external layer.

The PVDC copolymer is preferably an anionic aqueous dispersion of a vinylidene chloride/methyl acrylate copolymer.

The PVDC copolymer is preferably free from solvents and plasticizers.

In particular, it can be the commercial product DIOFAN A 736 of BASF.

The homogeneous layer of PVDC copolymer is preferably present in a quantity of at least 30 g/m².

The use, as PVDC copolymer, of suitable polyfunctional resins allows the production of a coated product in which the internal and external layers of the coating have the same composition.

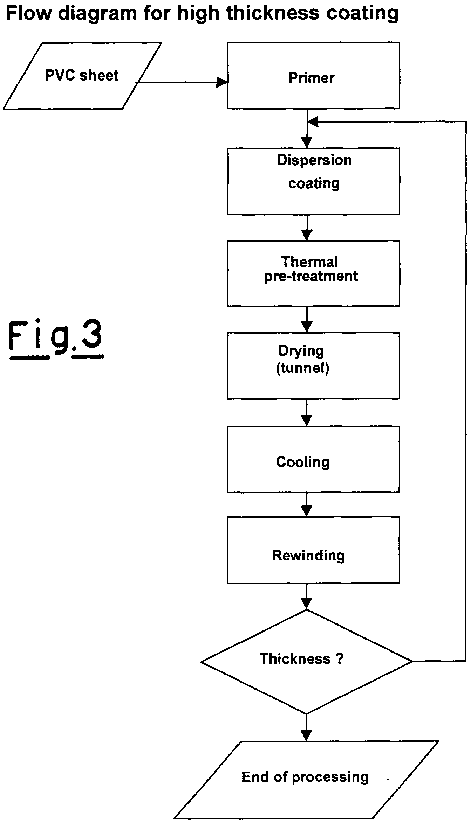

As schematized in Figure 3, the method for the preparation of a film with a high thickness coating, comprises the following phases:
a) preheating of a thermoplastic base;
b) corona treatment of said base;
c) depositing onto the base deriving from phase b) of a primer in dispersion, suspension or aqueous emulsion;
d) coating on said product of a homogeneous layer of PVDC (polyvinylidene-chloride) copolymer in a quantity of at least 20 g/m² of dry product;
e) thermal pretreatment at a temperature ranging from 60 to 100°C;
f) drying at a temperature within the range of 70-120°C, with an air rate of 50 to 100 m/min;
g) cooling of the coated film to a temperature of the film ranging from 30 to 50°C;
h) rewinding of the coated film obtained.

In particular, phases d)-h), from the coating to the rewinding, can be repeated until the final desired thickness is obtained.

The first preheating phase of the thermoplastic base, in particular calendered rigid PVC, is carried out at a temperature ranging from 60 to 90°C.

Phase b) of the process according to the present invention consists in a corona treatment. This treatment comprises high frequency discharges which ionize the surface of the base, thus allowing the primer in dispersion, emulsion or aqueous solution to adhere to the PVC thermoplastic base.

In this way, in fact, a surface tension is created ranging from 40 to 50 dine/cm together with a high affinity between base and primer.

The corona treatment can be substituted with other equivalent treatment (plasma, combinations of other energy sources) which increase the surface tension of the base and consequently its affinity with respect to the products applied.

In phase c) a primer in dispersion, suspension or aqueous emulsion is deposited on the base coming from phase b).

This phase is carried out at an operating rate of about 100 m/min.

In particular, the product obtained after said phase c) has sufficient water resistance to prevent the primer from becoming mixed with the PVDC dispersion during the subsequent coating phase.

Phase d) comprises the coating on the lined base deriving from phase c), of a homogeneous layer of PVDC (polyvinylidene-chloride) copolymer in a quantity of at least 20 g/m² of dry product.

This phase is also carried out at an operating rate of about 100 m/min.

In particular, phase d) allows a homogeneous thickness to be deposited per single layer of at least 30 g/m² (dry product), which, after the subsequent phases e)-g), enables a perfect formation of the film to be obtained, without craters or bubbles and with crystallization control (shown by means of microscopic analysis, morpholine test, absorption peaks in the IR spectrum).

This barrier layer, i.e. the homogeneous layer of high thickness PVDC copolymer has high cohesion and adhesion values with respect to the base coated with the primer, in both directions, longitudinal and transversal. It has values, in fact, of about 5-6 on an empirical scale from 1 to 6 for samples conditioned at 24, 48 and 72 hours/38°C/90%RH, measured with the INSTRON TT-CM equipment.

The total permeability depends on the thickness of the base and on the number of barrier layers deposited. The reference values however should fall within the following ranges:

| Oxygen [cm³ m⁻² x d x bar] at 23°C and 75% RH | Water vapor [g m⁻² x d] at 38°C and 90% RH |
|---|---|
| 0.2 - 0.6 | 0.1 - 0.5 |

The process according to the present invention subsequently comprises a thermal pretreatment phase e) at a temperature ranging from 60 to 100°C, followed by a drying phase f) at a temperature within the range of 70 to 120°C with an air rate ranging from 50 to 100 m/min.

Said phase f) is carried out for example by tunnel drying. The selection of the temperature and air rate depend on various factors such as the operating rate of the machine and consequently the film rate, the thickness of the base and barrier coating.

Finally a cooling phase g) of the coated film is included, at a temperature of the film ranging from 30 to 50°C. Said cooling phase is extremely important to ensure a homogeneous layer with a perfect formation of the film, without craters or bubbles and crystallization control.

Finally there is is the winding phase h) of the coated film obtained.

When, for example, an end-product is desired with a barrier layer thickness of 60, 90 or 120 g/m², the product obtained is subjected again to steps d)-g) of the process according to the present invention.

The following table indicates the permeability values obtained with the products according to the present invention.

Lower permeability values can be reached by further applying the coating until the necessary thickness is obtained.

| Base thickness (lm) | PVDC coating (g m⁻²) | Total permeability | |
|---|---|---|---|
| | | Oxygen [cm³/m² x d x bar] | Water vapor [g/m² x d] |
| | 60 | 0.67 | 0.38 |
| 200 | 90 | 0.45 | 0.26 |
| | 120 | 0.34 | 0.20 |
| | 60 | 0.67 | 0.36 |
| 250 | 90 | 0.45 | 0.25 |
| | 120 | 0.34 | 0.19 |
| | 60 | 0.65 | 0.35 |
| 300 | 90 | 0.44 | 0.24 |
| | 120 | 0.34 | 0.19 |
| | 180 | 0.23 | 0.13 |

The main advantage of the product according to the present invention lies in the fact that it is a product with extremely reduced diffusional properties with respect to water vapour, gases and aromas, and is therefore a product with optimum barrier properties, an excellent quality for the production, for example, of blister-type packaging.

A further advantage is that the process for the preparation of the product of the present invention allows high thickness coatings to be applied for each machine passage, thus drastically reducing the lead time and consequently improving numerous cost factors (operating and financial).

An additional advantage of the product according to the present invention derives from the use of a primer in dispersion, solution or aqueous emulsion which avoids the use of solvents. The end-product obtained is of a better quality (impossible solvent retention) and is more ecological (in fact the ecological balance of the product is improved). Its preparation is also safer (reduced flammability risk), with lower plant costs (anti-deflagration measures are no longer necessary) and logistic expenses (storage, residue handling, etc.).

## Claims

1. A film with a high thickness coating, consisting of a thermoplastic base, wherein the high thickness coating comprises a first layer made up of a primer in dispersion, suspension or aqueous emulsion and at least one subsequent homogeneous layer of a PVDC (polyvinylidene-chloride) copolymer, **characterized in that** said at least one homogeneous layer of PVDC (polyvinylidene-chloride) copolymer is present in a quantity of at least 20 g/m².

2. The film according to claim 1, **characterized in that** the thermoplastic base is a calendered rigid PVC film.

3. The film according to claim 1, **characterized in that** the primer is in aqueous dispersion.

4. The film according to claim 1, **characterized in that** the primer in aqueous dispersion can be selected from polyurethanes, terpolymer acrylic emulsions with different functional groups, elastomers.

5. The film according to claim 1, **characterized in that** the primer in aqueous dispersion is the commercial product EMULDUR (Basf).

6. The film according to claim 1, **characterized in that** the layer formed by the primer has a homogeneous thickness which varies from 3 to 5 g/m².

7. The film according to claim 1, **characterized in that** the PVDC (polyvinylidene-chloride) copolymer is associated with other polymers and auxiliary systems.

8. The film according to claim 7, **characterized in that** the PVDC copolymer is associated with sliding and antiblocking systems.

9. The film according to claim 8, **characterized in that** the sliding system is a surface-active agent.

10. The film according to claim 1, **characterized in that** the PVDC copolymer is an anionic aqueous dispersion of a vinylidene chloride/methyl acrylate copolymer.

11. The film according to claim 1, **characterized in that** the PVDC copolymer is without solvents and plasticizers.

12. The film according to claim 1, **characterized in that** the PVDC copolymer is the commercial product DIOFAN A 736 (BASF) .

13. The film according to claim 1, **characterized in that** the homogeneous layer of PVDC copolymer can be present in a quantity of at least 30 g/m².

14. Use of the film with a high thickness coating according to one of the previous claims, for the preparation of packaging.

15. Use according to claim 14, for packaging for pharmaceutical and medical-surgical products.

16. A blister obtained by the thermoforming of the product according to any of the claims from 1-13, the subsequent filling of the blisters thus formed and welding.

17. The blister according to claim 16 for pharmaceutical and medical-surgical products.

18. A method for the preparation of a film with a high thickness coating, according to any of the claims from 1 to 13, which comprises the following phases:
a) preheating of a thermoplastic base;
b) corona treatment of said base;
c) depositing onto the base deriving from phase b) of a primer in dispersion, suspension or aqueous emulsion;
d) coating on said product of a homogeneous layer of PVDC (polyvinylidene-chloride) copolymer in a quantity of at least 20 g/m² of dry product;
e) thermal pretreatment at a temperature ranging from 60 to 100°C;
f) drying at a temperature within the range of 70-120°C, with an air rate of 50 to 100 m/min;
g) cooling of the coated film to a temperature of the film ranging from 30 to 50°C;
h) rewinding of the coated film obtained.

19. The method according to claim 18, **characterized in that** phases d)-h), from the coating to the rewinding, are repeated once or several times.

20. The method according to claim 18, **characterized in that** the preheating phase a) is effected at a temperature ranging from 60 to 90°C.

21. The method according to claim 18, **characterized in that** phase b) consists in a corona treatment with high frequency discharges which ionize the surface of the base.

22. The method according to claim 18, **characterized in that** phase c) and phase d) are effected at an operating rate of about 100 m/min.

23. The method according to claim 18, **characterized in that** phase f) is effected by tunnel drying.
